# EUROPEAN PATENT SPECIFICATION

(11) **EP 4 200 724 B1**
(45) Date of publication and mention of the grant of the patent: **14.10.2026**
(21) Application number: 21859144.4
(22) Date of filing: 19.08.2021
(51) Int. Cl.: G06F 21/31, G06F 21/45

(54) **EFFICIENT AND SECURE AUTHENTICATION SYSTEM AND METHOD**
EFFIZIENTES UND SICHERES AUTHENTIFIZIERUNGSSYSTEM UND -VERFAHREN
SYSTÈME ET PROCÉDÉ D'AUTHENTIFICATION EFFICACE ET SÉCURISÉE

(30) Priority: 21.08.2020 US 202063068756 P
(43) Date of publication of application: 28.06.2023
(73) Proprietor: Visa International Service Association, San Francisco, California 94128 (US)
(72) Inventor: BECK, Gary, San Francisco, California 94128 (US); ZIOLKOWSKI, Richard, San Francisco, California 94128 (US); PANT, Geetansh, San Francisco, California 94128 (US); HENSLER, Arne, San Francisco, California 94128 (US)
(74) Representative: EIP
(86) International application number: PCT/US2021/046723
(87) International publication number: WO 2022/040441

(56) References cited:
- KR-A- 20170 024 995
- US-A1- 2014 057 596
- US-A1- 2014 172 617
- US-A1- 2014 244 511
- US-A1- 2014 244 511
- US-A1- 2015 229 623
- US-B2- 9 477 960

## Description

### BACKGROUND

During a transaction, it is desirable to authenticate a user conducting an interaction such as a transaction. However, authenticating a user for each and every interaction can be problematic, especially if it impedes normal interaction processing. For instance, in the context of data streaming services, repeatedly authenticating users or their devices can result in interruptions in service for those users, especially when the authentication processes fail for some reason. Similarly, in the context of payment transactions, repeatedly authenticating users may result in situations where desired resources are not obtained by those users.

Embodiments of the invention address these and other problems, individually and collectively.

Document US 2014/244511 A1 discloses a method wherein no challenge is provided to a user if a risk score is below a threshold, and providing a challenge if above, and thereafter the system interacting with the user.

### SUMMARY

Embodiments of the invention relate to a method of classifying addresses with one or more challenge rates and determining if authentication should be performed for transactions based on the challenge rate associated with an address. The following examples are non-limiting. The invention is defined only by the scope of the appended claims.

An embodiment of the invention is directed to a method comprising transmitting, by a resource provider computer, interaction history information comprising at least a plurality of addresses to a server computer; receiving, by the resource provider computer, a challenge summary from the server computer, wherein the challenge summary associates each address of the plurality of addresses to a challenge rate from a range of challenge rates; determining, by the resource provider computer, a challenge rate threshold based on the challenge summary; interacting, by the resource provider computer, with a user utilizing at least an address from the plurality of addresses; determining, by the resource provider computer, if the challenge rate associated with the address exceeds the challenge rate threshold; performing, by the resource provider computer, an authentication of the user if the challenge rate associated with the address does not exceed the challenge rate threshold; and then initiating, by the resource provider computer, an authorization process of the interaction with the user.

Another embodiment of the invention includes a server computer comprising: a memory configured to store computer-executable instructions; and a processor in communication with the memory configured to execute the computer-executable instructions to at least: transmit interaction history information comprising at least a plurality of addresses to a computer; receive a challenge summary from the computer, wherein the challenge summary associates each address of the plurality of addresses to a challenge rate from a range of challenge rates; determine a challenge rate threshold based on the challenge summary; interact with a user utilizing at least an address from the plurality of addresses; determine if the challenge rate associated with the address exceeds the challenge rate threshold; perform an authentication of the user if the challenge rate associated with the address does not exceed the challenge rate threshold; and then initiate an authorization process of the interaction with the user.

Another embodiment includes a computer-implemented method comprising: receiving, by a server computer and from a resource provider computer, interaction history information comprising at least a plurality of addresses; determining, by the server computer, a challenge summary based on the interaction history information, the challenge summary associating each address of the plurality of addresses to a challenge rate from a range of challenge rates; receiving, by the server computer, an authentication request message for an access request corresponding to user utilizing at least an address of the plurality of addresses from the resource provider computer, wherein the authentication request message is received after the resource provider computer determines that the challenge rate associated with the address does not exceed a challenge rate threshold determined by the resource provider computer; and transmitting, by the server computer, an authentication response message to the resource provider computer.

These and other embodiments are described in further detail below.

### BRIEF DESCRIPTION OF THE DRAWINGS

FIG. 1 shows a block diagram of an interaction and authentication system according to an embodiment.
FIG. 2 shows a block diagram illustrating a resource provider computer.
FIG. 3 shows a block diagram illustrating a directory server computer.
FIG. 4 shows a flow diagram illustrating a method for generating a summary.
FIG. 5 shows a method according to an embodiment.
FIG. 6 illustrates a block diagram of an exemplary data access system for performing user authentication.

### DETAILED DESCRIPTION

Prior to discussing embodiments of the invention, description of some terms may be helpful in understanding embodiments of the invention.

A "user" may include an individual or a computational device. In some embodiments, a user may be associated with one or more personal accounts, user devices and/or mobile devices. In some embodiments, the user may be a cardholder, account holder, or consumer.

A "user device" may be any suitable device that a user can interact with (e.g., a payment card or mobile phone). User devices may be in any suitable form. Some examples of user devices include cellular phones, PDAs, personal computers (PCs), tablet computers, and the like. In some embodiments, a mobile device may comprise a user device.

A "mobile device" (sometimes referred to as a mobile communication device) may comprise any suitable electronic device that may be transported and operated by a user, which may also provide remote communication capabilities to a network. A mobile communication device may communicate using a mobile phone (wireless) network, wireless data network (e.g., 3G, 4G or similar networks), Wi-Fi, Bluetooth, Bluetooth Low Energy (BLE), Wi-Max, or any other communication medium that may provide access to a network such as the Internet or a private network. Examples of mobile devices include mobile phones (e.g., cellular phones), PDAs, tablet computers, net books, laptop computers, wearable devices (e.g., watches), vehicles such as automobiles and motorcycles, personal music players, hand-held specialized readers, etc. A mobile device may comprise any suitable hardware and software for performing such functions, and may also include multiple devices or components (e.g., when a device has remote access to a network by tethering to another device - i.e. using the other device as a modem - both devices taken together may be considered a single mobile device).

A "resource provider" may be an entity that can provide a resource such as goods, services, information, and/or access. Examples of resource providers includes merchants, data providers, transit agencies, governmental entities, venue and dwelling operators, etc.

An "authentication request message" may be an electronic message that is sent to one or more computing devices to request authentication for a transaction. In some embodiments, the authentication request message may be an electronic message that is sent to a processing network, such as a payment processing network, and/or an authorizing entity, such as an issuer, of a payment account to request authentication for a payment transaction. In some implementations, the authentication request message may include cardholder, resource provider, and transaction-specific information. The authentication request message according to some embodiments may comply with HTTP message format, which may be defined according to the HTTP messaging specification, and may be an HTTP "GET" or "POST" message.

An "authentication response message" may be an electronic message reply to an authentication request. In some embodiments, the authentication response message may be generated by an authorizing entity such as an issuing financial institution (i.e. issuer) or a processing network such as a payment processing network. In some implementations, the authentication response message may include cardholder, resource provider, and transaction-specific information. An authentication response message according to some embodiments may comply with ISO 8583, which is a message format for systems that exchange electronic transaction information associated with a payment made by a user using a payment device or a payment account. The authentication response message may include an authentication result (which may also be known as an authentication determination), which may be a value that an account issuing bank or authorizing entity returns in response to an authentication request in an electronic message (either directly or through the processing network) to a resource provider's access device (e.g., point of sale terminal) that indicates authentication of a user conducting a transaction.

An "authorizing entity" may be an entity that authorizes a request. Examples of an authorizing entity may be an issuer, a governmental agency, a document repository, an access administrator, etc. An "issuer" may typically refer to a business entity (e.g., a bank) that maintains an account for a user.

A "processor" may include any suitable data computation device or devices. A processor may comprise one or more microprocessors working together to accomplish a desired function. The processor may include CPU comprises at least one high-speed data processor adequate to execute program components for executing user and/or system-generated requests. The CPU may be a microprocessor such as AMD's Athlon, Duron and/or Opteron; IBM and/or Motorola's PowerPC; IBM's and Sony's Cell processor; Intel's Celeron, Itanium, Pentium, Xeon, and/or XScale; and/or the like processor(s).

A "memory" may be any suitable device or devices that can store electronic data. A suitable memory may comprise a non-transitory computer readable medium that stores instructions that can be executed by a processor to implement a desired method. Examples of memories may comprise one or more memory chips, disk drives, etc. Such memories may operate using any suitable electrical, optical, and/or magnetic mode of operation.

An "authorization request message" may be an electronic message that is sent to a processing network (payment processing network) and/or an authorizing entity (issuer) of a payment account to request authorization for a payment transaction. An authorization request message according to some embodiments may comply with ISO 8583, which is a message format for systems that exchange electronic transaction information associated with a payment made by a user utilizing a payment device or a payment account. An authorization request message may also comprise additional data elements corresponding to "identification information" including, for example, a service code, a CVV (card verification value), a dCVV (dynamic card verification value), an expiration date, etc. An authorization request message may also comprise "transaction data," such as any information associated with a current transaction (e.g., the transaction amount, resource provider identifier, resource provider location, etc.), as well as any other information that may be utilized in determining whether to identify and/or authorize a payment transaction.

An "authorization response message" may be an electronic message reply to an authorization request message generated by an authorizing entity (issuing financial institution (i.e. issuer)) or a processing network (payment processing network). An authorization response message according to some embodiments may comply with ISO 8583, which is a message format for systems that exchange electronic transaction information associated with a payment made by a user utilizing a payment device or a payment account. The authorization response message may include an authorization code, which may be a code that an account authorizing entity such as an account issuing bank returns in response to an authorization request message in an electronic message (either directly or through the processing network) to a resource provider's access device (e.g., point of sale terminal) that indicates approval of the transaction. The code may serve as proof of authorization. As noted above, in some embodiments, a processing network may generate and/or forward the authorization response message to the resource provider.

A "server computer" may typically be a powerful computer or cluster of computers. For example, the server computer can be a large mainframe, a minicomputer cluster, or a group of servers functioning as a unit. In one example, a server computer may be a database server coupled to a Web server. The server computer may be associated with an entity such as a resource provider, processing network, a wallet provider, an authentication cloud, an authorizing entity, an acquirer, a transport computer, or an issuer.

A "computing device" may be any suitable electronic device that can process and communicate information to other electronic devices. The computing device may include a processor and a computer readable medium coupled to the processor, the computer readable medium comprising code, executable by the processor. The computing device may also each include an external communication interface for communicating with each other and other entities. A mobile device, a cardholder device, a user device, a consumer device, and a server computing device may be exemplary types of computing devices.

A "server computing device" may be any suitable electronic device operated by a server computer. In some embodiments, the server computing device may receive messages from the server computer and send the messages to one or more other entities. Additionally, the server computing device may forward messages received from one or more other entities to the server computer. The server computing device may be a type of computing device. In some embodiments, the server computing device may be operated by a processor (payment processor) or authorizing entity computer (issuer computer).

A "Hypertext Transfer Protocol (HTTP) messaging standard" may be a protocol defining how messages are formatted and transmitted over the World Wide Web. HTTP messages may include "GET" or "POST" messages, where "GET" messages may request data from a specified resource and "POST" messages may submit data to a specific resource for processing. In some embodiments, a HTTP message may comprise a request line including method, URL, and version fields, header lines, and an entity body. HTTP messages based on the standard may include messages that contain HTML, JavaScript, JSON, AJAX, XML, etc. In some cases, messages sent to and from a computing device of a user may be formatted according to a HTTP message format associated with the HTTP messaging standard.

An embodiment of the invention is directed to a method comprising transmitting, by a resource provider computer, interaction history information comprising at least a plurality of addresses to a server computer. The server computer generates a challenge summary and then the resource provider computer receives the challenge summary from the server computer. The challenge summary associates each address of the plurality of addresses to a challenge rate from a range of challenge rates. The resource provider computer determines a challenge rate threshold based on the challenge summary. In an interaction, the resource provider computer interacts with a user that operates a user device, by utilizing at least an address from the plurality of addresses. The method also includes determining, by the resource provider computer, if the challenge rate associated with the address exceeds the challenge rate threshold. The method also includes performing, by the resource provider computer, an authentication of the user if the challenge rate associated with the address does not exceed the challenge rate threshold. The method also includes initiating, by the resource provider computer, an authorization process of the interaction with the user. In embodiments, the interaction with the user may include conducting a transaction or processing an access request.

In the context of a payment transaction, when a user wishes to make an online purchase with a merchant over the Internet, the user types in (or otherwise provides) a credit or debit card account number, cardholder name, expiration date, and/or the printed card verification value into respective fields on the merchant's checkout page. In this case, the card's magnetic fingerprint or the card's variable datum is not used in the transaction, and they are not available to the payment processing network or the issuing bank to aid in verifying that the card was actually present during the transaction. Accordingly, there is a greater risk of fraud with such online purchases. To reduce the occurrence of fraud and to improve data security, authentication systems can be used.

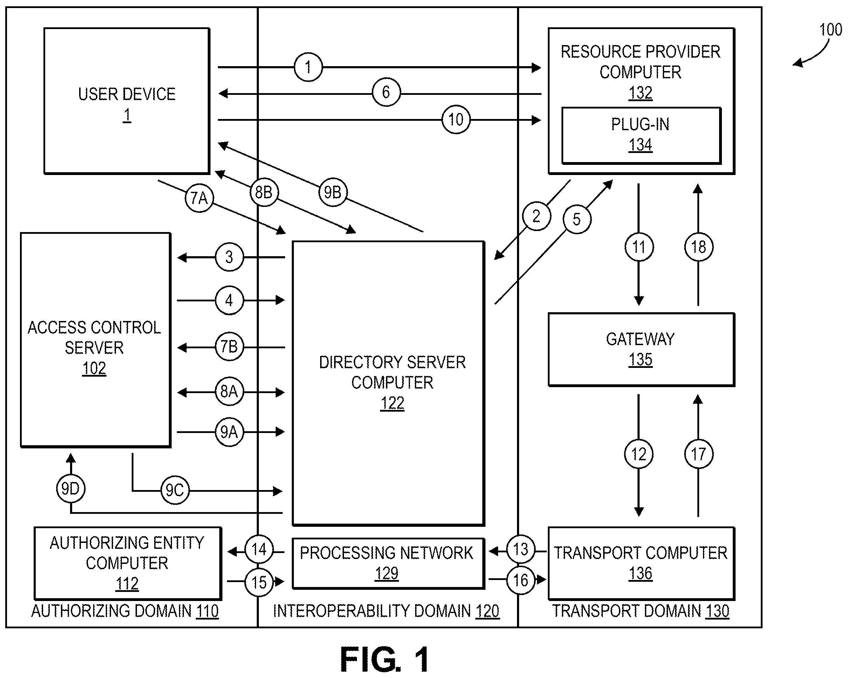

FIG. 1 illustrates a block diagram 100 of an exemplary payment system for performing user authentication. The exemplary payment system may comprise an authorizing domain 110, interoperability domain 120, and a transport domain 130. The interoperability domain 120 may allow authorizing domain systems and the transport domain systems to interoperate.

The authorizing domain 110 may comprise a user using a user computing device 1, an access control server (ACS) 102, and an authorizing entity computer 112. In some embodiments, the ACS 102 may be part of authorizing entity computer 112. Authorizing entity computer 112 may be a server computing device that is programmed to authorize or decline interactions such as payment transactions or data requests.

The access control server 102 may be a server computing device storing and/or accessing registered cardholder account and access information. The ACS 102 is typically operated by an issuer, authorizing entity computer, or its processor. The ACS 102 validates user participation in an authentication program, performs user verification at time of an interaction, and can provide digitally signed responses to resource providers as proof that authentication processing has been performed.

The interoperability domain 120 may include a directory server 122 and a processing network 129. The processing network 129 may include data processing subsystems, networks, and operations used to support and deliver authorization services, exception file services, and clearing and settlement services, and may be in operative communication with entities in the authorizing domain 110 and transport domain 130. In some embodiments, the directory server 122 can be part of the processing network.

The transport domain 130 may comprise a resource provider 132 that operates a resource provider computer including a resource provider plug-in 134, a gateway 135, and transport computer 136. Transport computer 136 may be operated by a server computing device and may include a processing module. The processing module may comprise code to enable communication between the transport domain 130 and interoperability domain 120 for transaction processing.

The plug-in 134, in some embodiments, comprises a software module integrated into resource provider 132 websites, which can be used to provide the interface between the user authentication program and the resource provider's processing software. The plug-in 134 may verify the authorizing entity's digital signature that is in an authentication response message. The plug-in 134 may be managed by a separate server computer (not shown). The plug-in 134 may comprise a software development kit (SDK), library files or functions, or other software modules.

The gateway 135 may serve as an entry point to a network of computers. Gateway 135 may be in operative communication with processing network 129. In some embodiments, a user device operated by the user may interact with processing network 129 via the gateway 135.

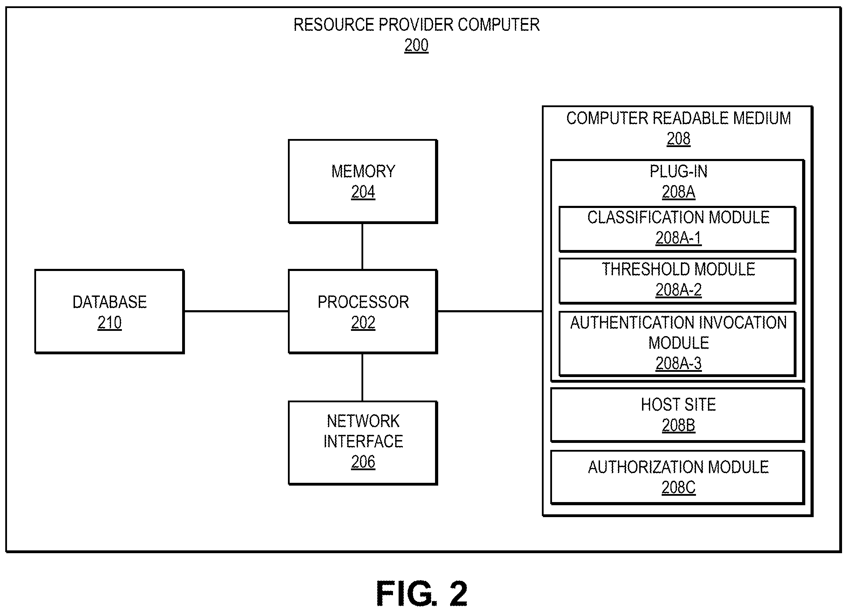

FIG. 2 shows a block diagram of a resource provider computer 200, which can be used by the resource provider 132 in FIG. 1. FIG. 2 shows a plug-in 208A which can be similar to the plug-in 134 in FIG. 1. The resource provider computer may comprise a processor 202. The processor 202 may be coupled to a memory 204, a network interface 206, and a computer readable medium 208. The computer readable medium 208 may comprise any suitable number and types of software modules.

The memory 204 may be used to store data and code. The memory 204 may be coupled to the processor 202 internally or externally (e.g., via cloud based data storage), and may comprise any combination of volatile and/or non-volatile memory such as RAM, DRAM, ROM, flash, or any other suitable memory device.

The network interface 206 may include an interface that can allow the resource provider computer 200 to communicate with external computers and/or devices. Some examples of the network interface 206 may include a modem, a physical network interface (such as an Ethernet card or other Network Interface Card (NIC)), a virtual network interface, a communications port, a Personal Computer Memory Card International Association (PCMCIA) slot and card, or the like. The wireless protocols enabled by the network interface 206 may include Wi-Fi. Data transferred via the network interface 206 may be in the form of signals which may be electrical, electromagnetic, optical, or any other signal capable of being received by the external communications interface (collectively referred to as "electronic signals" or "electronic messages"). These electronic messages that may comprise data or instructions may be provided between the network interface 206 and other devices via a communications path or channel. As noted above, any suitable communication path or channel may be used such as, for instance, a wire or cable, fiber optics, a telephone line, a cellular link, a radio frequency (RF) link, a WAN or LAN network, the Internet, or any other suitable medium.

The computer readable medium 208 may comprise code, executable by the processor 202, to cause the processor 202 to: transmit interaction history information comprising at least a plurality of addresses to a server computer; receive a challenge summary from the server computer, wherein the challenge summary associates each address of the plurality of addresses to a challenge rate from a range of challenge rates; determine a challenge rate threshold based on the challenge summary; interact with a user utilizing at least an address from the plurality of addresses; determine if the challenge rate associated with the address exceeds the challenge rate threshold; perform an authentication of the user if the challenge rate associated with the address does not exceed the challenge rate threshold; and then initiate the access request.

The computer readable medium 208 may comprise a number of software modules including, but not limited to, a plug-in 208A, a host site 208B, and an authorization module 208C.

The plug-in 208A may cause the processor 202 perform authorizing entity computer authentication services for the resource provider computer 200. The plug-in 208A may include a number of submodules including a classification module 208A-1, a threshold module 208A-2, and an authentication module 208A-3.

The classification module 208A-1 may comprise code, executable by the processor 202 to classify interactions and data associated with the interactions according to addresses such as institution identifiers (e.g., BINs). The threshold module 208A-2 may comprise code, executable by the processor 202 to set or determine a threshold such as a challenge rate threshold. The threshold module 208A-2 and the processor 202 may also apply a set or determined threshold to a current challenge rate for an address to determine if the authentication module 208A-3 should or should not be invoked. The authentication module 208A-3 may comprise code, executable by the processor 202 to perform authorization entity authentication services. The invocation of authentication processing can be determined based upon an outcome determined by the threshold module 208A-2 and the processor 202.

The host site 208B may comprise code, executable by the processor 202 to operate a host site such as a Web site where resources can be provided to a user.

The authorization module 208C may comprise code that causes the processor 202 to generate and transmit authorization request messages. For example, the authorization module 208C may be used to generate an authorization request message comprising an account identifier comprising an address such as a BIN, and an authentication cryptogram (data signed by an authorization entity). The authorization module 208C may also comprise code, executable by the processor 202 to receive and process authorization response messages from authorization entities.

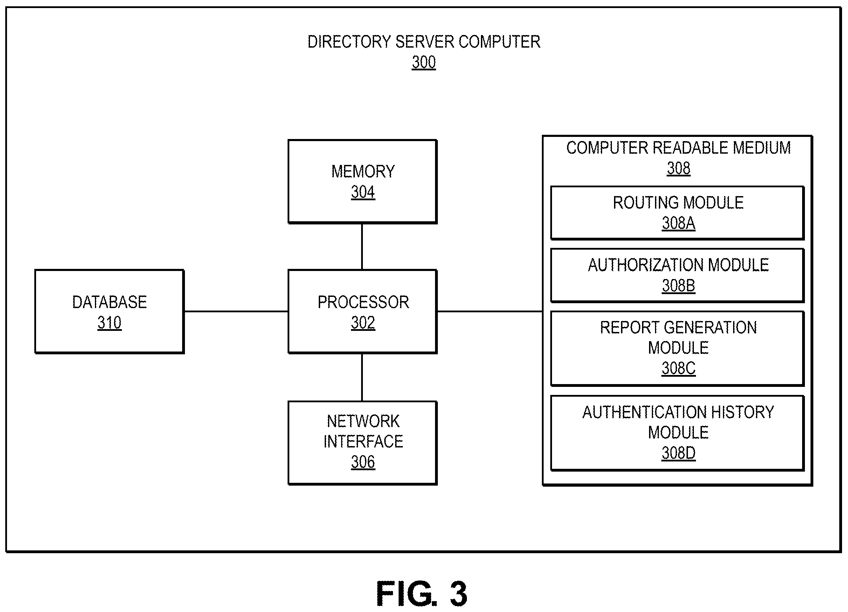

FIG. 3 shows a block diagram of a directory server computer 300 according to an embodiment. The directory server computer 300 may comprise a processor 302. The processor 302 may be coupled to a memory 304, a network interface 306, a computer readable medium 308, and a database 310. The computer readable medium 308 may comprise any suitable number and types of software modules.

The memory 304 may be used to store data and code. The memory 304 may be coupled to the processor 302 internally or externally (e.g., via cloud based data storage), and may comprise any combination of volatile and/or non-volatile memory such as RAM, DRAM, ROM, flash, or any other suitable memory device.

The network interface 306 may have the same or different features to the previously described network interface 206.

The database 310 may store data relating to interactions and authentication data for those interactions. In this regard, it may work with the authentication history module 308B on the computer readable medium 308. The database 310 may also store summary reports.

The computer readable medium 308 may comprise code, executable by the processor 302, for a method comprising: receiving, by a server computer and from a resource provider computer, interaction history information comprising at least a plurality of addresses; determining, by the server computer, a challenge summary based on the interaction history information, the challenge summary associating each address of the plurality of addresses to a challenge rate from a range of challenge rates; receiving, by the server computer, an authentication request message for an access request corresponding to user utilizing at least an address of the plurality of addresses from the resource provider computer, wherein the authentication request message is received after the resource provider computer determines that the challenge rate associated with the address does not exceed a challenge rate threshold determined by the resource provider computer; and transmitting, by the server computer, an authentication response message to the resource provider computer.

The computer readable medium 308 may comprise a number of software modules including, but not limited to, a routing module 308A, an authentication module 308B, a report generation module 308C, and an authentication history module 308D.

The routing module 308A may comprise code that causes the processor 802 to process authentication requests and responses. The routing module 308A may, in conjunction with the processor 302 receive and process authentication requests and responses and process the requests and responses.

The authentication module 308B may comprise code that causes the processor 802 to process authentication requests and responses.

The report generation module 308C and the processor 302 can produce reports that are described herein, that can be provided to the resource provider computer for evaluation by the resource provider.

The authentication history module 308D and the processor 302 can collect authentication data associated with various interactions and can store that data in the database 310. Such historical authentication data may be used in any potential dispute resolution processes.

Methods according to embodiments can be described. A method can be described with respect to challenges that might occur in response to users conducting payment transactions with resource providers such as online merchants.

Referring to FIG. 1, after an account of user operating the user device 1 has been enrolled in an user authentication program (which may be managed by a payment processor operating the directory server computer 122 and the processing network 129, in conjunction with the an authorizing entity operating the access control server 102 and the access control server 102), the user operating the user device 1 may be enabled for use of user authentication at any participating resource provider.

At step 1, a user operating the user device 1 finalizes a purchase. For example, a user operating the user device 1 browses at a participating resource provider's website, adds items to the shopping cart, and provides information utilized for checkout (e.g., by keyboard entering data or by using an electronic wallet, a resource provider one click service, or some other form-fill method). A user operating the user device 1 may then confirm a purchase (e.g., by clicking or selecting a button labeled "Buy"), which triggers a payment form (e.g., sends a HTTP POST message) to be submitted to the resource provider operating the resource provider computer 132. Thus, the resource provider operating the resource provider computer 132 may now have data to perform the financial transaction, including a Primary Account Number (PAN) of the card presented for the purchase.

At step 2, the plug-in 134 initiates an authentication process. When a user operating the user device 1 attempts to finalize a purchase or transaction (e.g., clicks "Buy" button), the plug-in 134 may be activated. The plug-in 134 can use threshold module and a processor in the resource provider computer 132 to analyze the PAN and extract the address of BIN associated with the PAN. The threshold module and a processor in the resource provider computer 132 can then determine the most recent challenge rate associated with the determined BIN. For example, the challenge rate for the BIN may be obtained from a report that is stored in the plug-in 134 or it may be retrieved from an external computer associated with the plug-in 134. The plug-in 134 can then compare the current challenge rate for the BIN and can compare it to the threshold. If it is less than the threshold, then the plug-in 134 may invoke an authentication invocation module. The resource provider computer 132 would begin an authentication process by performing at least steps 2 and 6. If the current challenge rate is greater than the threshold, then the authentication invocation module may not be activated. The resource provider computer 132 may simply generate an authorization request message for the current transaction without requesting that the authorizing entity associated with the BIN authenticate the user. The resource provider operating the resource provider computer 132 would proceed to step 11 without performing steps 2 and 6 in FIG. 1. Further details and examples regarding challenge rates and challenge rate thresholds are provided below.

If the current challenge rate is below the challenge rate threshold, then in step 2, the plug-in 134 may send a request with the cardholder's provided PAN and other information to the directory server 122 to determine whether the card is in a participating range - i.e., whether the particular card is enabled for use with the user authentication system.

At step 3, directory server 122 processes the request from plug-in 134. The directory server computer 122, in some embodiments, authenticates the resource provider (e.g., using digital certificates). If resource provider authentication is successful, the directory server computer 122 may forward the resource provider query to the appropriate access control server (ACS) 102 to determine whether authentication (or proof of authentication attempt) is available for the PAN. If resource provider authentication fails, the directory server computer 122 may return an error and the user authentication transaction is terminated.

At step 4, ACS 102 responds to directory server computer 122. The ACS 102 may determine whether user authentication is available based upon the PAN, prepare a response, and send the response to the directory server computer 122.

At step 5, the directory server computer 122 returns the ACS response (or its own) to the plug-in 134. If user authentication is available, the response may include a custom URL (i.e., Uniform Resource Locator) of a routing service (within the interoperability domain 120) and also of the ACS 102 to which the resource provider computer 132 will send a payer authentication request.

At step 6, the plug-in 134 sends the payer authentication request to the ACS 102. The plug-in 134 may send the payer authentication request to the ACS 102 via the user's user device 1 (e.g., a browser or application executing on a desktop computer, mobile device, or other computing device) using the URL received in step 5. The payer authentication request can contain information about the purchase transaction.

At step 6, the resource provider computer 132 (using the plug-in 134), may transmit a message over HTTP to the user device 1 of the user. This message may include a URL, which causes the user device 1 operated by the user to be routed to a routing module or service in the directory server computer 122 or to the access control server 102.

At step 7A, the user's user device may utilize the URL to contact the routing module in the directory server 122, and the payer authentication request is routed to the ACS 102 in step 7B. In some embodiments, the messages sent in steps 7A and 7B may be HTTP messages.

At steps 8A and 8B, the ACS 102 formats an authentication request for the user operating the user device 1 and receives a response from user operating the user device 1. The authentication request may be returned to the browser/application running on the user device 1 of user via the routing module in the directory server computer 122. Each of these messages, in some embodiments, may be HTTP response messages. The payload may cause the user device 1 operated by the user to display an "authentication challenge" user interface. The user may be authenticated using processes applicable to the PAN (e.g., password, PIN entry, etc.).

For example, after clicking "Buy" at step 1, the user operating the user device 1 may see a user interface that contains purchase details, and may also see user interface elements (e.g., within a window or overlay, generated responsive to receipt of the authentication request message (e.g., HTML response message) received at step 8A) that prompts the user operating the user device 1 to provide his or her user authentication password. The user operating the user device 1 may enter their password and submit the password (e.g., by clicking or selecting a button labeled "Submit"). This may trigger another message (e.g., an HTTP message), which may include the password or a representation of the password, to be transmitted at step 8B to the routing module and forwarded on to the ACS 102. The ACS 102 may then determine whether the provided password is correct, since the user provided the password to the ACS 102 during the prior registration process.

In other embodiments, instead of the authentication request passing to the directory server 122, the access control server 102 can communicate with the cardholder's device directly without passing through the directory server 122.

The ACS 102 may format a payer authentication response with appropriate values, including an authentication status and, if applicable, an Electronic Commerce Indicator (ECI) and/or a Cardholder Authentication Verification Value (CAVV). The CAVV may be utilized to confirm that authentication of the user was successful. The ACS 102 may sign the payer authentication response with the authorizing entity computer's customer authentication signature key.

At step 9A, the ACS 102 returns the signed payer authentication response including authentication results to the routing module in the directory server computer 122, which forwards the response toward the plug-in 134 by sending it to the user device 1 operated by the user, at step 9B.

At step 9C, in some embodiments, whether or not authentication was successful, the ACS 102 may send a copy of the payer authentication response, including related data to a database such as an authentication history database server of the directory server computer 122.

At step 10, the user device 1 of the user forwards the signed payer authentication response (received at step 9B) to the plug-in 134. At step 11, the plug-in 134 may process the received payer authentication response. The plug-in 134 may validate the signature on the payer authentication response, along with other data included in the response and then pass the results of the authentication attempt to the resource provider computer 132.

The resource provider computer 132 may determine whether to proceed with authorization of the transaction based on information received from the plug-in 134. If the resource provider computer 132 determines that proceeding with authorization is appropriate, the resource provider computer 132 may send an authorization request message to the transport computer 136 via gateway 135 at steps 11 and 12. The authorization request message may include the Electronic Commerce Indicator (ECI) appropriate to the authentication status and a Cardholder Authentication Verification Value (CAVV), if applicable.

At step 13, the transport computer 136 may send the authorization request message to processing network 129. In some cases, the resource provider computer 12 may directly send the authorization request message to processing network 129. In some embodiments, the authorization request message may be a message formatted according to an ISO message format associated with the ISO messaging standard.

At step 14, the processing network 129 may send the authorization request message to authorizing entity computer 112, which may receive and process the authorization request message. In some embodiments, either the authorizing entity computer 112 or processing network 129, on the behalf of authorizing entity computer 112, may perform verification of the CAVV.

At step 15, authorizing entity computer 112 may choose to approve or decline an authorization request message (e.g., based on insufficient funds, closed account, etc.) and may return an authorization response message including an authorization decision (e.g., approve or decline). In some embodiments, the authorization response message may be a message formatted according to an ISO message format associated with the ISO messaging standard. Authorizing entity 112 may send the authorization response message to processing network 129.

At step 16-18, processing network 129 may forward the authorization response message to resource provider computer 132 via transport computer 136 and gateway 135. In some embodiments, resource provider computer 132 may display an order confirmation including details about the order, delivery, and customer service to the browser or application executing on the user device 1 operated by the user.

At some point, a clearing and settlement process for the transaction can occur between the transport computer 136, the processing network 129, and the authorizing entity computer 112.

As noted above, resource providers may wish to determine whether or not and/or how often to invoke authentication processing, since excessive authentication process can impede overall system processing.

Some embodiments of the invention enable this functionality by classifying challenge rate data with respect to different authorizing entities. In embodiments of the invention, a challenge may include prompting a user for a password, a PIN, and/or biometric information. Each authorizing entity may have a different algorithm or criteria for determining whether or not to challenge a user during an interaction. The overall challenge rate for an authorizing entity with respect to all transactions processed by the authorizing entity, or with respect to transactions processed from a specific resource provider, may be used by a resource provider to determine if the authorizing entity is challenging users too frequently. Resource providers may use the challenge rate data to select one or more challenge rate thresholds for one or more authorizing entities. The one or more thresholds may be used by the resource providers to determine if they should or should not be invoking authentication processes with the authorizing entities when transactions are conducted with account identifiers from those authorization entities. In some embodiments, the challenge rate thresholds and the logic regarding whether to invoke or not invoke an authentication process with an authorizing entity may be managed by the plug in in the resource provider computer.

In embodiments of the invention, a resource provider computer can first obtain or determine interaction history information. Interaction history information can comprise transaction data such as transaction amounts for transactions, addresses (e.g., institution identifier, BIN, etc.) associated with authorizing entities, account identifiers used to conduct transactions, and challenge data for the transactions. In some embodiments, the interaction history information may be collected over a time period of time such as over a 1 month, or 2 month, or 3 month period.

The interaction history information may be inserted and/or formatted into a standardized file by the resource provider computer. The standardized file may additionally include at least a resource provider identifier that can identify the resource provider associated with the provided interaction history information.

The file may then be transmitted by the resource provider computer to a server computer such as the previously described directory server computer or other computer. That computer can perform an ETL (extract, transform, and load) process of the file data, which includes at least reformatting the file and matching each address associated with each account number for each transaction to an authorizing entity. Addresses included within the file may be compared to at least a plurality of addresses stored within one or more databases to identify authorizing entities associated with the addresses.

The server computer may then calculate a challenge rate associated with each address using the interaction history information. In some embodiments, the server computer may have challenge rate data including data regarding which transactions or interactions were challenged. The server computer can classify each address into one of a plurality of challenge rate buckets based on the calculated challenge rate. For example, addresses may be classified into a bucket for either a 0% challenge rate, a 0 ≤ 1% challenge rate, a 1 ≤ 2% challenge rate, a 2 ≤ 3% challenge rate, a 4 ≤ 5 % challenge rate, a 5 ≤ 10 % challenge rate, and so on. Specifically, there may be three addresses or BINs (bank identification numbers) associated with three banks. The three banks, A, B, and C may challenge their users 1, 5, and 9 percent of the time, respectively. These may be the challenge rates for the three banks, and each of banks A, B, and C may be classified into one of the above-described challenge rate buckets.

The server computer may then generate a resource provider-specific challenge summary comprising at least a list of challenge rate buckets and transaction volume and authorization volume data corresponding to each bucket of the list of challenge rate buckets. The resource provider-specific challenge summary may further include a cumulative challenge rate for all of the authorizing entities that have conducted transactions with the resource provider based on at least the provided interaction history information. In embodiments, the resource provider-specific challenge summary may include a total amount of authorizations, a total amount of authentications, a total amount of transactions impacted by chargebacks, etc.

The resource provider-specific challenge summary may then be viewed by any personnel at a resource provider using a user interface.

In some embodiments, the resource provider-specific challenge summary may further include dynamic functionalities, such that the summary can be updated by the server computer in response to the system receiving new interaction history information from the resource provider. In some embodiments, the new interaction history information may be provided to the server computer by the resource provider computer on a daily or weekly or monthly basis. In some embodiments, the resource provider-specific challenge summary can further enable the resource provider to configure one or more parameters with user input in order to further assess how these one or more parameters may affect a cumulative challenge rate and/or other values associated with the resource provider. Parameters may include (but are not limited to) one or more of the following: a manual review rate, a resource provider cost for manual review processing, a usage rate for fraud and chargeback solutions, a resource provider cost for fraud and chargeback solutions, a chargeback rate, an authorizing entity chargeback processing fee, a resource provider cost for fraud chargeback processing, a re-presentment transaction rate, an authorizing entity re-presentment fee, a resource provider cost for re-presentments, a pre-authorization screening rate, and/or a post-authorization reversal rate.

The resource provider may choose to perform one or more actions responsive to receiving the resource provider-specific challenge summary. In some embodiments, the resource provider may at least choose to select a challenge rate threshold, such that only addresses that have been classified in buckets with challenge rates below the selected threshold may undergo further authorizing entity initiated authentication. For example, if a resource provider has selected a challenge rate threshold to be 4% and a user conducts a transaction with the resource provider using a debit card associated with an address that has been classified into a challenge rate bucket of 5-10%, then the classification system may determine that the address is classified into a challenge rate above the selected challenge rate threshold and authorizing entity initiated authentication does not need to be performed for the transaction. As another example, if a resource provider has selected a challenge rate threshold to be 4% and a user conducts a transaction with the resource provider using a debit card associated with an address that has been classified into a challenge rate bucket of 0%, then the classification system may determine that the address is classified into a challenge rate below the selected challenge rate threshold and authorizing entity initiated authentication should be performed for the transaction. Therefore, the transaction may directly undergo an authorization process without performing an authorizing entity authentication of the user.

In some embodiments, the ranges of challenge rates may anonymize the specific addresses and their challenge rates. For example, the range of 3-4% could include transactions associated with three different banks, each of which has a challenge rate within that range. As such, the challenge rate data can be provided to the resource provider, without revealing specific challenge rates for the specific banks.

In some embodiments, the resource provider may further receive insight on how a transaction volume and/or authorization volume may be affected by using (or not using) a challenge rate threshold. In further embodiments, the resource provider may receive insight on how a transaction volume and/or authorization volume and/or cumulative challenge rate may be changed by enacting different challenge rate thresholds. In some embodiments, the resource provider may further be provided information on a return of investment (ROI) using the resource provider-specific challenge summary.

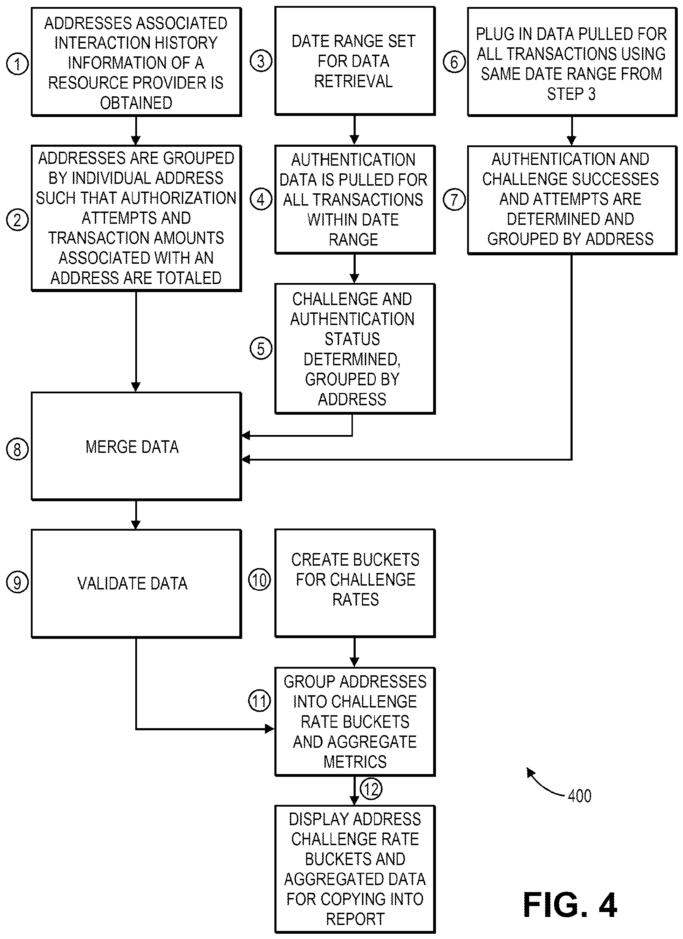

FIG. 4 shows a flow diagram 400 illustrating a method for generating a summary.

At step 1, the addresses associated with interaction history information of a resource provider may be obtained over a time period provided by the resource provider. For example, the interaction history may comprise data associated with a plurality of transactions. The account numbers for accounts used to conduct those transactions may be extracted and the bank identification numbers (BINs) may be obtained from those account numbers. The BINs may be addresses for authorizing entities such as banks, since they identify the banks. The BINs may constitute a portion (e.g., the first six digits) of primary account numbers for credit, debit, or prepaid cards.

At step 2, the addresses are grouped by individual address, such that authorizations attempts and transaction amounts for each transaction associated with an address are totaled. For example, all transactions conducted with a specific authorizing entity with the specific resource provider may be grouped together. The number of authorization attempts and the total transaction amounts for that group of transactions may be added together and totaled.

At step 3, a date range may be established, and authentication data and transaction data may be obtained for all addresses. For example, various authorizing entities may be identified by addresses such as BINs. Transaction data associated with those BINs and authentication data associated with those transactions may be gathered.

At step 4, authentication data is pulled for all transactions identified in step 3. For example, transaction data and authentication data for all transactions conducted within the data range may be gathered from an authentication history module within a directory server. Transaction data could include an amount of a transaction or a resource provider associated with the transaction, etc. Authentication data for the transaction may include whether the transaction was subjected to an authentication entity authentication process, whether the authentication process was successful or not, what type of authentication was used, etc.

At step 5, the transaction data and the authentication data are grouped by address. For example, the transaction data and the authentication gathered may be grouped according to addresses such as BINs, so that the transaction data and the authentication gathered may be grouped according to authorizing entities that participated in those transactions.

At step 6, plug-in data corresponding to additional transactions may be pulled for all transactions using a same date range as used in step 3 from another database at the resource provider or at a service provider computer operating on behalf of the resource provider computer.

At step 7, using the plug-in data, authentication and challenge status and/or successes (or attempts) are determined for the additional transactions. Each additional transaction may further be grouped by address.

At step 8, the plug-in data and the data from the authentication history module in the directory server, and the other data from the resource provider computer may be merged. The merged data may be grouped according to address or bank identification number.

At step 9, the merged data may be validated in order to determine that the data does not include errors (e.g., such as accounting for more challenges than transactions). Erroneous data may be removed from the merged data.

At step 10, buckets may be identified for a plurality of challenge rates as described above.

At step 11, the addresses included in the resource provider address list may be classified into one of the identified buckets.

At step 12, each bucket corresponding to a particular challenge rate from the plurality of challenge rates may be displayed. Data corresponding to the buckets and/or a total number of authorizations may further be aggregated and displayed into a report and/or summary for the resource provider.

In embodiments, addresses, such as BINs or institution identifiers, may be grouped into one or more challenge rate buckets. Each challenge rate bucket may include at least data corresponding to a number of authorization transaction attempts and a number of authorization transactions that have been approved. A total authorized sales volume may further be included, which indicates an amount of sales volume that the resource provider has received from authorized transactions using at least a BIN within the respective challenge rate bucket.

The resource provider may select a challenge rate threshold for performing authentication as discussed above. In an example, the resource provider has selected a challenge rate threshold of 20%. Therefore, buckets with a challenge rate greater than 20% may skip additional authentication, such as an authorizing entity initiated authentication step, during transaction processing and may proceed straight to authorization.

In some embodiments, the resource provider may further select whether to perform authentication for transactions conducted with a BIN that has been classified as "No Match". In such cases the transactions, the resource provider has opted to not perform authentication for transactions using BINs that have been unmatched. Therefore, such transactions will also go straight to an authorization step during transaction processing.

User interfaces generated for displaying information about the actual BINs are not shown as the transactions for BINs are aggregated according to challenge rate. For example, challenge rate and transaction data for BIN 1 for Bank A and BIN 2 for Bank B may be aggregated in the > 50% range, so that a person viewing the challenge rata data will not know the exact challenge rates associated with the different banks or authorizing entities. However, a resource provider will be provided with sufficient information to make sound decisions on whether or not challenges should or should not be used. As such, embodiments provide for a more effective tool for a resource provider to make decisions to optimize the performance of their systems, while obscuring actual data associated with various authorizing entities such as banks.

In embodiments, the resource provider-specific challenge summary may include a table that further includes authorization rates for each bucket. The authorization rates are determined by calculating a ratio of the number of transactions approved to the number of authorization transactions attempted. AOV (authorized order values) values for an authorized volume of each bucket are may also be displayed or presented in the resource provider-specific challenge summary. The AOV values are determined by calculating a ratio of the authorized sales volume to the authorization transactions that were approved.

In embodiments, a transaction share and a purchase share may be calculated for the entire data set of transactions. The transaction share may identify a total percentage of authenticated transactions (for all buckets) out of the total amount of authorized transactions. The purchase share may identify a total percentage of authenticated sales volume (for all buckets) out of the total amount of authorized sales volume.

A cumulative challenge rate may additionally be determined to indicate a percentage of transactions that have and/or will be challenged by an authorizing entity such as an issuer.

It will be appreciated that the transaction share, the purchase share, and the cumulative challenge rate can change as a resource provider dynamically adjusts their selected challenged rate threshold.

In embodiments, resource providers can adjust a plurality of parameters (via manual entry) as necessary to fit their respective rates and fees. Parameters may include (but is not limited to) one or more of the following: a manual review rate, a resource provider cost for manual review processing, a usage rate for fraud and chargeback solutions, a resource provider cost for fraud and chargeback solutions, a chargeback rate, an acquirer chargeback processing fee, a resource provider cost for fraud chargeback processing, a re-presentment transaction rate, an authorizing entity re-presentment fee, a resource provider cost for re-presentments, a pre-authorization screening rate, and/or a post-authorization reversal rate. These parameters are not visible to the classification system in order to maintain privacy for the resource provider.

In accordance with at least one embodiment, a resource provider-specific challenge summary may include ROI (return on investment) outcomes for the resource provider based on the selected challenge rate threshold and the one or more input parameters as described herein. In particular, the resource provider-specific challenge summary may include calculations for an amount of chargeback fees, re-presentments fees, manual review costs, and/or authentication fees that have been estimated for the resource provider based on the interaction history information and the selected challenge rate threshold. Such calculations can be used by the resource provider to determine how beneficial and/or detrimental a particular challenge rate threshold may be for future transactions, such as data access requests, in comparison to other challenge rate thresholds.

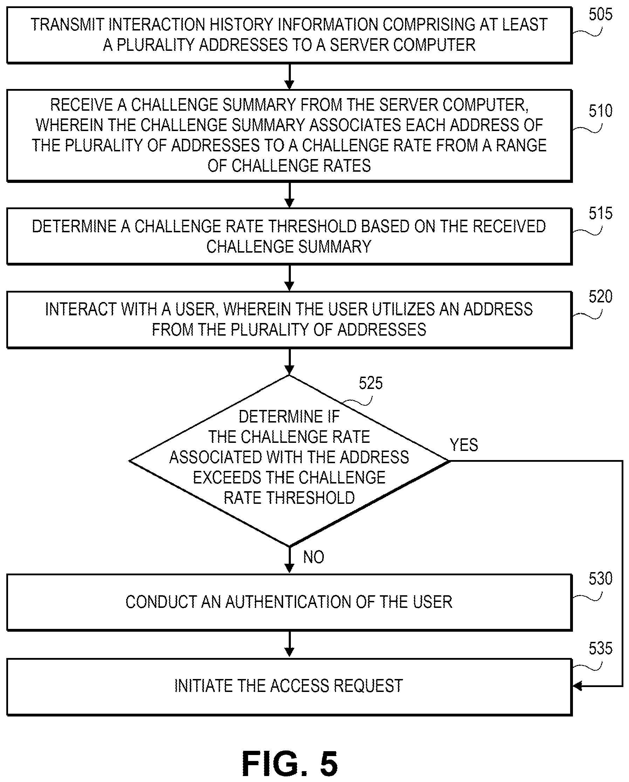

FIG. 5 shows a method according to an embodiment.

At step 505, a resource provider computer may transmit interaction history information comprising at least a plurality of addresses to a server computer. The server computer may be configured to perform the methods of the classification system and generate a challenge summary as described in the above figures.

At step 510, the resource provider computer may receive a challenge summary from the server computer. The challenge summary may associate each address of the plurality of addresses to a challenge rate from a range of challenge rates.

At step 515, the resource provider computer may determine a challenge rate threshold based on the received challenge summary. In embodiments, the resource provider computer may provide input, such as from an associated entity, which is used to determine the challenge rate threshold.

At step 520, the resource provider computer may interact with a user, wherein the user utilizes an address from the plurality of addresses. In embodiments, the resource provider computer may initiate a transaction for a good and/or service with a user that utilizes a debit and/or credit card that comprises at least an address (e.g., institution identifier) from the plurality of addresses. The interaction with the user may comprise an access request for data maintained by the resource provider.

At step 525, the resource provider computer may determine if the challenge rate associated with the address exceeds the challenge rate threshold. If the challenge rate is determined as exceeding the threshold, then the resource provider computer may skip step 530 and proceed to step 535 instead.

At step 530, the resource provider computer may conduct an authentication of the user. The authentication process is only conducted if the challenge rate associated with the address does not exceed the challenge rate threshold. In some embodiments, the authentication process may involve transmitting a challenge message to a mobile device operated by the user. Exemplary challenge messages may include a prompt for password and/or a PIN. In such embodiments, the user may then transmit, via the mobile device, a challenge response to the resource provider computer. Responsive to the resource provider computer verifying a validity of the challenge response, a data access request associated with the interaction with the user may then proceed to step 535.

At step 535, the resource provider computer may finally initiate an authorization process of the data access request. Authorization may include generating an authorization request message comprising at least a destination for the data access request and an address of the user to a transport computer. In embodiments where the authorization process is for a transaction, authorization may include generating an authorization request message comprising at least a transaction amount and a primary account number associated with the debit and/or credit card of the user to a transport computer.

The transport computer may then forward the authorization request message to an authorizing entity computer via a processing network.

The authorizing entity computer may determine whether the user has sufficient access rights to determine whether or not to authorize the data access request. In embodiments where the authorization request message is for a financial transaction, the authorizing entity computer may determine whether the user has sufficient funds and determine whether or not to authorize the transaction. The authorizing entity computer may then transmit an authorization response message based on the determination to the transport computer via the processing network.

The transport computer may then forward the authorization response message indicating whether the data access request was authorized to the resource provider computer.

The resource provider computer may then receive the authorization response message and decide to grant the user access to the data based on the indicated authorization. In embodiments where the authorization response message is for a financial transaction, the resource provider computer may decide to grant the user access to the good and/or resource based on the indicated authorization.

A clearing and settlement process for the transaction can occur at a later time.

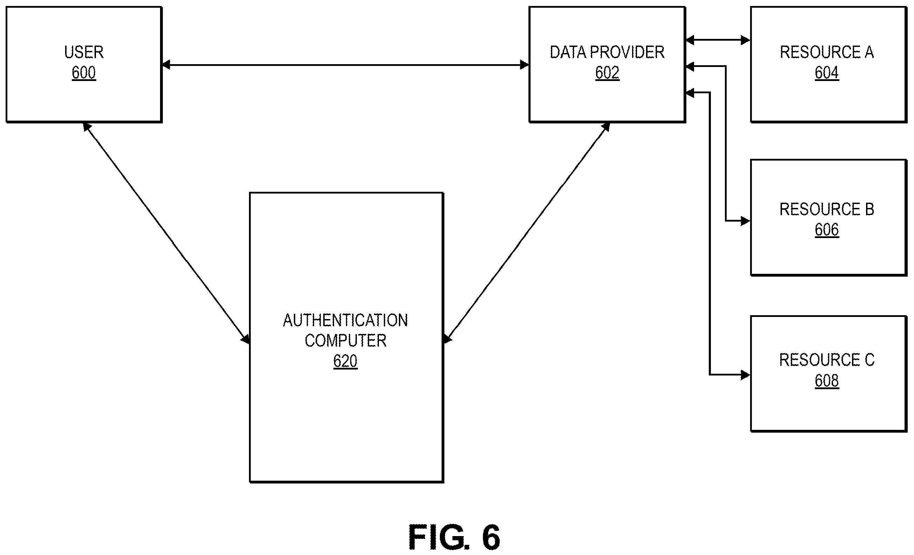

FIG. 6 illustrates a block diagram of an exemplary data access system for performing user authentication.

In some embodiments, the current disclosure comprises data access requests for data maintained or provided by one or more data providers. In order to access such data, data access requests may be generated or provided on behalf of a user attempting to gain access to a data resource (resource). The classification system described herein may also be utilized to determine a challenge rate threshold based on obtained interaction history information that includes authentication and/or challenge data from historical data access requests with data providers. Embodiments of the present invention enable this functionality by classifying data associated with one or more data providers by a plurality of challenge rates. In embodiments, a challenge may include prompting a user for a password, a PIN, and/or biometric information during a request by the user for access to data or a resource provided by the data providers. The challenge may be prompted to a user in the event that the data provider suspects fraudulent activity. Data providers may be able to use the classification data to select a challenge rate threshold, such that additional authentication is only performed for data access requests with data providers that have been classified as having a challenge rate equal to or below the selected threshold.

FIG. 6 includes a user 600 (operating a user computer) providing a data access request message to a data provider 602. In embodiments, the data access request message may comprise an IP address of a selected resource (e.g., Resource A 604). The data provider 602 may provide access to Resource A 604, Resource B 606, and Resource C 608). The data provider 602 may be embodied by a server computer. The Resources A, B, and C 604, 606, 608 could be resource providers that provide different types of content such as streaming video content. Each Resource A, B, C 604, 606, 608 may be embodied by a computer and may be operated by a different entity and may have different authentication rates for data access requests.

In embodiments, the data provider 60 may have previously obtained interaction history information (e.g., historical data access request messages) associated with data access requests by a plurality of users requesting content from the Resources A, B, and C 604, 606, 608). The data provider 602 may have determined challenge rates associated with the Resources A, B, and C 604, 606, 608, and may also have determined a challenge rate threshold based upon a challenge summary (as described above).

The data provider 602 can determine if the address in the data access request is associated with a challenge rate that is above or below the threshold. If it is below the threshold, then it will instruct an authentication computer 620 to authenticate the user 600. If it is above the threshold, then the data provider 602 will send the request to the identified Resource (e.g., 604, 606, or 608) to obtain the requested data for the user 600.

Embodiments of the invention include numerous advantages. In particular, embodiments enable a resource provider to see a risk/benefit analysis of limiting authentication for a plurality of transactions that may cause friction with a user if authentication was otherwise enabled. Embodiments also enable a resource provider-specific classification of addresses by a third-party system while still maintaining an anonymity of the authorizing entities associated with each address because the resource provider only receives data that summarizes challenge rates and does not specifically identify which address corresponds to a particular challenge rate.

Furthermore, embodiments enable the resource provider to customize and/or dynamically adjust a challenge summary with one or more additional resource provider-specific parameters. Embodiments additionally enable dynamically updating the resource provider-specific challenge summary as information corresponding to future transactions may also be provided to the classification system and can indicate if there are any changes to a challenge rate policy associated with an authorizing entity.

The above description is illustrative and is not restrictive. Many variations of the invention may become apparent to those skilled in the art upon review of the disclosure.

It may be understood that the present invention as described above can be implemented in the form of control logic using computer software in a modular or integrated manner. Based on the disclosure and teachings provided herein, a person of ordinary skill in the art may know and appreciate other ways and/or methods to implement the present invention using hardware and a combination of hardware and software. Any of the software components or functions described in this application, may be implemented as software code to be executed by a processor using any suitable computer language such as, for example, Java, C, C++, Python or Perl using, for example, conventional or object-oriented techniques. The software code may be stored as a series of instructions, or commands on a computer readable medium, such as a random access memory (RAM), a read only memory (ROM), a magnetic medium such as a hard-drive or a floppy disk, or an optical medium such as a CD-ROM. Any such computer readable medium may reside on or within a single computational apparatus, and may be present on or within different computational apparatuses within a system or network.

A recitation of "a", "an" or "the" is intended to mean "one or more" unless specifically indicated to the contrary. Reference to a "first" component does not necessarily require that a second component be provided. Moreover reference to a "first" or a "second" component does not limit the referenced component to a particular location unless expressly stated.

## Claims

1. A method, comprising:
transmitting, by a resource provider computer, interaction history information comprising at least a plurality of addresses to a server computer;
receiving, by the resource provider computer, a challenge summary from the server computer, wherein the challenge summary associates each address of the plurality of addresses to a challenge rate from a range of challenge rates, said challenge rate being a frequency with which an authorizing entity associated with each respective address prompts a user for a password, a PIN and/or biometric information;
determining, by the resource provider computer, a challenge rate threshold based on the challenge summary;
interacting, by the resource provider computer, with a user utilizing an address from the plurality of addresses;
determining, by the resource provider computer, if the challenge rate associated with the address exceeds the challenge rate threshold;
performing, by the resource provider computer, an authentication of the user if the challenge rate associated with the address does not exceed the challenge rate threshold; and then
initiating, by the resource provider computer and with the authorizing entity associated with the address, an authorization process of the interaction with the user.

2. The method of claim 1, wherein if the challenge rate associated with the address does exceed the challenge rate threshold, the authentication of the user is not performed.

3. The method of claim 1, wherein the server computer is a directory server comprising a routing table.

4. The method of claim 1, wherein the interacting with the user includes receiving an access request for a resource associated with the resource provider computer.

5. The method of claim 1, wherein the plurality of addresses comprise institution identifiers and the method is managed by a plug-in integrated in the resource provider computer.

6. The method of claim 1, wherein the plurality of addresses comprise internet protocol (IP) addresses.

7. The method of claim 1, wherein the challenge summary includes interaction volumes and authorization volumes associated with the plurality of addresses.

8. The method of claim 1, wherein initiating the authorization process comprises transmitting an authorization request message to the authorizing entity associated with the address.

9. The method of claim 8, wherein the authorization request message is transmitted to the authorizing entity associated with the address via a transport computer or the server computer.

10. The method of claim 9, wherein the authorizing entity transmits a request for a secret from a user device operated by the user.

11. The method of claim 1, wherein the method includes not performing, by the resource provider computer, the authentication of the user if the challenge rate associated with the address does exceed the challenge rate threshold.

12. A resource provider computer comprising:
a memory configured to store computer-executable instructions; and
a processor in communication with the memory configured to execute the computer-executable instructions to at least:
transmit interaction history information comprising at least a plurality of addresses to a server computer;
receive a challenge summary from the server computer, wherein the challenge summary associates each address of the plurality of addresses to a challenge rate from a range of challenge rates, said challenge rate being a frequency with which an authorizing entity associated with each respective address prompts a user for a password, a PIN and/or biometric information;
determine a challenge rate threshold based on the challenge summary;
interact with a user utilizing an address from the plurality of addresses;
determine if the challenge rate associated with the address exceeds the challenge rate threshold;
perform an authentication of the user if the challenge rate associated with the address does not exceed the challenge rate threshold; and then
initiate, with the authorizing entity associated with the address, an authorization process of the interaction with the user.

13. The resource provider computer of claim 12, wherein the computer-executable instructions, when executed by the processor, further cause the resource provider computer to at least transmit, to the server computer, input for configuring one or more parameters of the challenge summary.

14. The resource provider computer of claim 12, wherein an identification of an authorizing entity associated with the plurality of addresses is absent in the challenge summary.

15. The resource provider computer of claim 12, wherein the challenge summary includes challenge rate buckets with different value ranges.

## Patentansprüche

1. Verfahren, umfassend:
das Übertragen von Interaktionshistorieinformationen, die mindestens eine Vielzahl von Adressen umfassen, durch einen Ressourcenanbietercomputer an einen Servercomputer;
das Empfangen eines Challenge-Summarys vom Servercomputer durch den Ressourcenanbietercomputer, wobei das Challenge-Summary jede Adresse der Vielzahl von Adressen einer Challenge-Rate aus einem Bereich von Challenge-Rates zuordnet, wobei die Challenge-Rate eine Häufigkeit ist, mit der eine der jeweiligen Adresse zugeordnete Autorisierungseinheit einen Benutzer zur Eingabe eines Passworts, einer PIN und/oder biometrischer Informationen auffordert;
das Bestimmen eines Challenge-Rate-Schwellenwerts durch den Ressourcenanbietercomputer basierend auf dem Challenge-Summary;
das Interagieren mit einem Benutzer, der eine Adresse aus der Vielzahl von Adressen verwendet, durch den Ressourcenanbietercomputer;
das Bestimmen durch den Ressourcenanbietercomputer, ob die mit der Adresse verbundene Challenge-Rate den Challenge-Rate-Schwellenwert überschreitet;
das Durchführen einer Authentifizierung des Benutzers durch den Ressourcenanbietercomputer, wenn die mit der Adresse verbundene Challenge-Rate den Challenge-Rate-Schwellenwert nicht überschreitet; und dann
das Initiieren eines Autorisierungsprozesses der Interaktion mit dem Benutzer durch den Ressourcenanbietercomputer und mit der Autorisierungseinheit, die mit der Adresse verbunden ist.

2. Verfahren nach Anspruch 1, wobei die Authentifizierung des Benutzers nicht durchgeführt wird, wenn die der Adresse zugeordnete Challenge-Rate den Challenge-Rate-Schwellenwert überschreitet.

3. Verfahren nach Anspruch 1, wobei der Servercomputer ein Verzeichnisserver ist, der eine Routing-Tabelle umfasst.

4. Verfahren nach Anspruch 1, wobei das Interagieren mit dem Benutzer das Empfangen einer Zugriffsanforderung für eine Ressource umfasst, die mit dem Ressourcenanbietercomputer verbunden ist.

5. Verfahren nach Anspruch 1, wobei die Vielzahl von Adressen Institutionskennungen umfasst und das Verfahren durch ein in den Ressourcenanbietercomputer integriertes Plugin verwaltet wird.

6. Verfahren nach Anspruch 1, wobei die Vielzahl von Adressen Internetprotokoll-(IP)-Adressen umfasst.

7. Verfahren nach Anspruch 1, wobei das Challenge-Summary Interaktionsvolumen und Autorisierungsvolumen enthält, die mit der Vielzahl von Adressen assoziiert sind.

8. Verfahren nach Anspruch 1, wobei das Initiieren des Autorisierungsprozesses das Senden einer Autorisierungsanforderungsnachricht an die Autorisierungseinheit umfasst, die der Adresse zugeordnet ist.

9. Verfahren nach Anspruch 8, wobei die Autorisierungsanforderungsnachricht über einen Transportcomputer oder den Servercomputer an die der Adresse zugeordnete Autorisierungseinheit übertragen wird.

10. Verfahren nach Anspruch 9, wobei die Autorisierungsentität eine Anforderung nach einem Geheimnis von einer durch den Benutzer betriebenen Benutzervorrichtung überträgt.

11. Verfahren nach Anspruch 1, wobei das Verfahren umfasst, dass die Authentifizierung des Benutzers durch den Ressourcenanbietercomputer nicht durchgeführt wird, wenn die mit der Adresse verbundene Challenge-Rate den Challenge-Rate-Schwellenwert überschreitet.

12. Ressourcenanbietercomputer, umfassend:
einen Speicher, der zum Speichern von computerausführbaren Anweisungen konfiguriert ist; und
einen Prozessor, der mit dem Speicher in Kommunikation steht und konfiguriert ist, die computerausführbaren Anweisungen auszuführen, um mindestens:
Interaktionshistorieninformationen, die mindestens eine Vielzahl von Adressen umfassen, an einen Servercomputer zu übertragen;
ein Challenge-Summary vom Servercomputer zu empfangen, wobei das Challenge-Summary jede Adresse der Vielzahl von Adressen einer Challenge-Rate aus einem Bereich von Challenge-Raten zuordnet, wobei die Challenge-Rate eine Häufigkeit ist
mit der eine Autorisierungseinheit, die mit jeder jeweiligen Adresse verknüpft ist, einen Benutzer zur Eingabe eines Passworts, einer PIN und/oder biometrischer Informationen auffordert;
einen Challenge-Rate-Schwellenwert auf Grundlage der Challenge-Zusammenfassung zu bestimmen; mit einem Benutzer unter Verwendung einer Adresse aus der Vielzahl von Adressen zu interagieren; zu bestimmen, ob die mit der Adresse verbundene Challenge-Rate den Challenge-Rate-Schwellenwert überschreitet;
eine Authentifizierung des Benutzers durchzuführen, wenn die mit der Adresse verbundene Challenge-Rate den Challenge-Rate-Schwellenwert nicht überschreitet; und dann
einen Autorisierungsprozess der Interaktion mit dem Benutzer mit der Adresse verbundenen Autorisierungseinheit einzuleiten.

13. Ressourcenanbietercomputer nach Anspruch 12, wobei die computerausführbaren Befehle, wenn sie von dem Prozessor ausgeführt werden, ferner bewirken, dass der Ressourcenanbietercomputer zumindest eine Eingabe an den Servercomputer überträgt, um einen oder mehrere Parameter des Challenge-Summarys zu konfigurieren.

14. Ressourcenanbietercomputer nach Anspruch 12, wobei eine Identifikation einer mit der Vielzahl von Adressen assoziierten Autorisierungseinheit in dem Challenge-Summary fehlt.

15. Ressourcenanbietercomputer nach Anspruch 12, wobei das Challenge-Summary Challenge-Rate-Buckets mit unterschiedlichen Wertebereichen umfasst.

## Revendications

1. Procédé, comprenant :
la transmission, par un ordinateur fournisseur de ressources, d'informations d'historique d'interactions comprenant au moins une pluralité d'adresses à un ordinateur serveur ;
la réception, par l'ordinateur fournisseur de ressources, d'un résumé de défis en provenance de l'ordinateur serveur, dans lequel le résumé de défis associe chaque adresse de la pluralité d'adresses à un taux de déclenchement de défis à partir d'une plage de taux de déclenchement de défis, ledit taux de déclenchement de défis étant une fréquence avec laquelle une entité d'autorisation associée à chaque adresse respective invite un utilisateur à fournir un mot de passe, un PIN et/ou des informations biométriques ;
la détermination, par l'ordinateur fournisseur de ressources, d'un seuil de taux de déclenchement de défis sur la base du résumé de défis ;
l'interaction, par l'ordinateur fournisseur de ressources, avec un utilisateur utilisant une adresse parmi la pluralité d'adresses ;
le fait que l'ordinateur fournisseur de ressources détermine si le taux de déclenchement de défis associé à l'adresse dépasse le seuil de taux de déclenchement de défis ;
la réalisation, par l'ordinateur fournisseur de ressources, d'une authentification de l'utilisateur si le taux de déclenchement de défis associé à l'adresse ne dépasse pas le seuil de taux de déclenchement de défis ; et ensuite
le lancement, par l'ordinateur fournisseur de ressources et avec l'entité d'autorisation associée à l'adresse, d'un processus d'autorisation de l'interaction avec l'utilisateur.

2. Procédé selon la revendication 1, dans lequel, si le taux de déclenchement de défis associé à l'adresse dépasse le seuil de taux de déclenchement de défis, l'authentification de l'utilisateur n'est pas réalisée.

3. Procédé selon la revendication 1, dans lequel l'ordinateur serveur est un serveur de répertoires comprenant une table de routage.

4. Procédé selon la revendication 1, dans lequel l'interaction avec l'utilisateur comporte la réception d'une demande d'accès pour une ressource associée à l'ordinateur fournisseur de ressources.

5. Procédé selon la revendication 1, dans lequel la pluralité d'adresses comprend des identifiants d'institution et le procédé est géré par un module d'extension intégré dans l'ordinateur fournisseur de ressources.

6. Procédé selon la revendication 1, dans lequel la pluralité d'adresses comprend des adresses de protocole Internet (IP).

7. Procédé selon la revendication 1, dans lequel le résumé de défis comporte des volumes d'interactions et des volumes d'autorisations associés à la pluralité d'adresses.

8. Procédé selon la revendication 1, dans lequel le lancement du processus d'autorisation comprend la transmission d'un message de demande d'autorisation à l'entité d'autorisation associée à l'adresse.

9. Procédé selon la revendication 8, dans lequel le message de demande d'autorisation est transmis à l'entité d'autorisation associée à l'adresse via un ordinateur de transport ou l'ordinateur serveur.

10. Procédé selon la revendication 9, dans lequel l'entité d'autorisation transmet une demande d'un secret au dispositif utilisateur actionné par l'utilisateur.

11. Procédé selon la revendication 1, dans lequel le procédé comporte le fait de ne pas réaliser, par l'ordinateur fournisseur de ressources, l'authentification de l'utilisateur si le taux de déclenchement de défis associé à l'adresse dépasse le seuil de taux de déclenchement de défis.

12. Ordinateur fournisseur de ressources comprenant :
une mémoire configurée pour stocker des instructions exécutables par ordinateur ; et
un processeur en communication avec la mémoire configuré pour exécuter les instructions exécutables par ordinateur pour au moins :
transmettre des informations d'historique d'interactions comprenant au moins une pluralité d'adresses à un ordinateur serveur ;
recevoir un résumé de défis en provenance de l'ordinateur serveur, dans lequel le résumé de défis associe chaque adresse de la pluralité d'adresses à un taux de déclenchement de défis à partir d'une plage de taux de déclenchement de défis, ledit taux de déclenchement de défis étant une fréquence à laquelle une entité d'autorisation associée à chaque adresse respective invite un utilisateur à fournir un mot de passe, un PIN et/ou des informations biométriques ;
déterminer un seuil de taux de déclenchement de défis sur la base du résumé de défis ;
interagir avec un utilisateur utilisant une adresse parmi la pluralité d'adresses ;
déterminer si le taux de déclenchement de défis associé à l'adresse dépasse le seuil de taux de déclenchement de défis ;
réaliser une authentification de l'utilisateur si le taux de déclenchement de défis associé à l'adresse ne dépasse pas le seuil de taux de déclenchement de défis ; et ensuite
lancer, avec l'entité d'autorisation associée à l'adresse, un processus d'autorisation de l'interaction avec l'utilisateur.

13. Ordinateur fournisseur de ressources selon la revendication 12, dans lequel les instructions exécutables par ordinateur, lorsqu'elles sont exécutées par le processeur, amènent en outre l'ordinateur fournisseur de ressources à transmettre au moins, à l'ordinateur serveur, une entrée pour configurer un ou plusieurs paramètres du résumé de défis.

14. Ordinateur fournisseur de ressources selon la revendication 12, dans lequel une identification d'une entité d'autorisation associée à la pluralité d'adresses est absente du résumé de défis.

15. Ordinateur fournisseur de ressources selon la revendication 12, dans lequel le résumé de défis comporte des compartiments de taux de déclenchement de défis avec différentes plages de valeurs.
